# EUROPEAN PATENT SPECIFICATION

(11) **EP 0 911 954 B1**
(45) Date of publication and mention of the grant of the patent: **02.05.2001**
(21) Application number: 97830533.2
(22) Date of filing: 23.10.1997
(51) Int. Cl.: H02P 7/00

(54) **PWM drive system in a current mode.**
Integriertes Antriebssystem für Pulsbreitenmodulation in Strombetriebsart
Système d'entraînement intégré à modulation de largeur d'impulsions en mode de courant

(43) Date of publication of application: 28.04.1999
(73) Proprietor: STMicroelectronics S.r.l., 20041 Agrate Brianza (Milano) (IT)
(72) Inventor: Salina, Alberto, 20051 Limbiate (IT); Brambilla, Donatella, 22060 Perticato di Mariano, Comense (IT)
(74) Representative: Pellegri, Alberto

(56) References cited:
- EP-A- 0 613 235
- US-A- 4 066 945

## Description

The present invention relates to integrated switching current mode drive systems of an external load and in particular to a PWM drive system, scaleable in terms of supply voltage and size of the integrated circuit while retaining a high accuracy.

Rotation of mass memory components such as floppy discs, CD Rom, PC, CD readers and similar devices that are often present in battery powered portable apparatuses, takes place by the use of electric motors electronically switched by completely integrated driving systems.

The document US-A-4 066 945 describes a linear driving circuit including a full bridge drive circuit across which a d.c. motor is connected. Each side of the bridge circuit has a feedback control loop wherein the currents through each half of the bridge circuit are compared to provide current feedback.

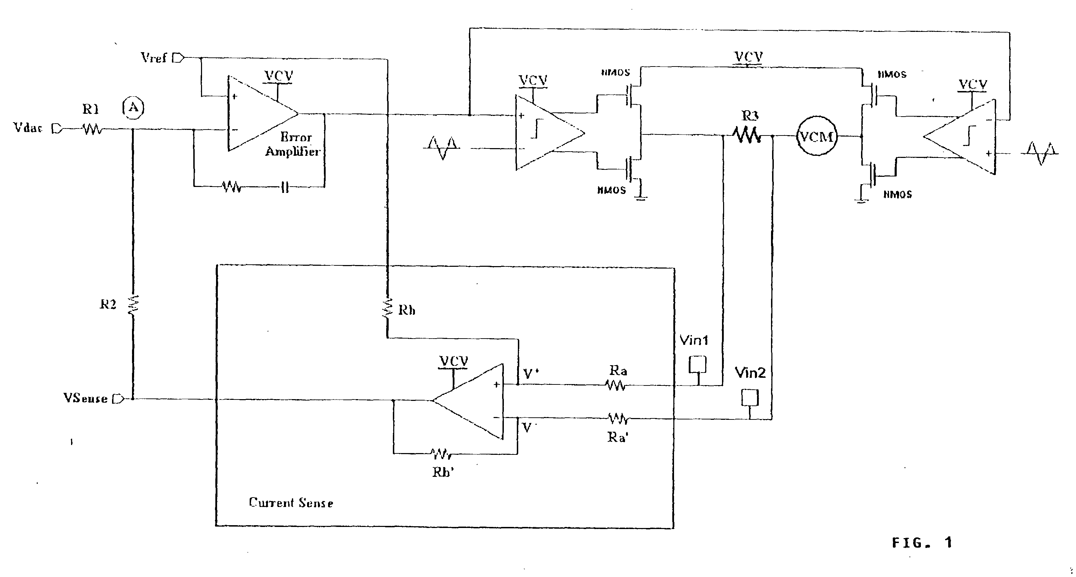

A typical diagram of a current mode, pulse width modulation (PWM) switching drive system is shown in Fig. 1, for a generic actuator or external load, which in the illustrated example is a so-called Voice Coil Motor (VCM).

The current control loop closes itself on the sum node A where the balance occurs of the currents imposed by the control voltage Vdac through the connecting resistor R1 to node A and by the voltage Vsense output by a sense amplifier of the current though the load, referred to as a whole as Current Sense, through the connecting resistor R2 to node A.

Therefore, the loop comprises a differential error amplifier between the reference voltage Vref and the voltage on the node A.

Therefore, the feedback voltage closing the control loop is derived from the voltage drop on the sense resistor R3, functionally connected in series to the load VCM.

It is easily noticed that in such a system, if the differential voltage on the R3 resistor terminals, that is, Vin1-Vin2, is comparable to the level of the reference voltage Vref, in the resistive series Ra, Rb will flow a current of a relatively small value and therefore an eventual mismatching between the resistive ratios Ra/Ra', Rb/Rb' will not cause sensible inaccuracies in the control system.

By contrast, if the differential voltage on the sensing resistor R3 is remarked markedly different from the reference voltage, a mismatching of the actual values of the above mentioned resistors will introduce inaccuracies.

In a typical system like that depicted in Fig. 1, in which the motor's winding is driven through a single bridge with a supply voltage that usually may be of 12V, also the circuitry that realizes the control loop is supplied at 12V.

The current sense amplifier, receives at input signals with a common mode ranging between 0 and 12V and its output is referred to a half of the supply voltage.

Commonly, the current sense amplifier is realized using a properly feedback operational amplifier OP, as illustrated in the diagram of Fig. 1. It carries out a conversion of the differential signal into a "single-ended" output signal Vsense and as a consequence there exists the problem of the output offset in respect to the reference voltage Vref. Such an offset is caused by mismatching of resistances.

By calling V⁺ the voltage on the positive terminal, the current through Rb is given by${\text{I = (V}}^{\text{+}} \text{- Vref)/Rb}$

Supposing an offset-free operational amplifier, the voltage on the negative terminal is the same.

In absence of an input differential signal, the current that flows in the two branches is the same, hence the output voltage is given by${\text{Vo = V}}^{\text{-}} {\text{- I ∗ Rb' = V}}^{\text{+}} {\text{- (V}}^{\text{+}} \text{- Vref) ∗ (Rb'/Rb)}$

If the matching of resistances is perfect (Rb = Rb'), the output voltage is exactly equal to the reference voltage.

By supposing a resistive mismatching (Rb=R, Rb'=R+ΔR), the output voltage is equal to${\text{Vo = V}}^{\text{-}} {\text{- I ∗ Rb' = V}}^{\text{+}} {\text{- (V}}^{\text{+}} \text{- Vrif) ∗ (1 + ΔR/R)}$

By considering, in the best of cases, a matching within 1% of the resistances and a difference of 6V between the common mode signal at the bridge terminals and the reference voltage, the voltage offset on Vsense will be of about 60mV.

The need to reduce consumption and the size of such integrated systems, dictated by the spreading of battery powered apparatuses, imposes a scaling down of supply voltages as well as of the size of integrated devices.

However, when because of such a scaling process the level difference between the reference voltage Vref and the differential voltage present at the inputs of the current sense amplifier, is accentuated a typical control system as that shown in Fig. 1 tends to become inaccurate because of the increase of the difference between the level of the common mode signal on the bridge terminals and the reference voltage level.

### PURPOSE AND SUMMARY OF THE INVENTION

Confronted with these difficulties, an effective solution has now been found to the increasingly critical aspect of mismatching when going through the scaling down of a switching current mode integrated drive system, as well as providing for other important advantages in terms of enhanced performances of the whole driving system.

According to the present invention, these important results are obtained by employing as a current sense amplifier a switched-capacitor amplifier composed of an operational amplifier alternately configured as a buffer and as a charge transfer circuit among capacitors by dedicated switches controlled by a pair of complementary control signals and provided with a Sample & Hold output stage.

The system is more easily controlled, and it is possible to command the sampling of the differential voltage (V1-V2) at an instant conveniently distant from the switching transients.

In this manner the control loop is practically made insensitive to the common mode signal of the voltage drop monitored on the current sensing resistor functionally connected in series to the external load of the integrated driving system.

A system made according to the present invention may be scaled down almost unlimitedly without any loss of accuracy caused by an increased difference between the levels of the compared voltages. The current sense amplifier, realized in a switched-capacitor technique ensures a theoretically infinite common mode rejection and hence a total cancellation of the offset due to inevitable mismatchings of integrated resistances.

### BRIEF DESCRIPTION OF THE DRAWINGS

**Figure 1** depicts the typical circuit diagram of a current mode switching drive system according to the known practice, as discussed above.

**Figure 2** shows the circuit diagram of a current mode switching drive system made according to the present invention.

### DESCRIPTION OF A PREFERRED EMBODIMENT OF THE INVENTION

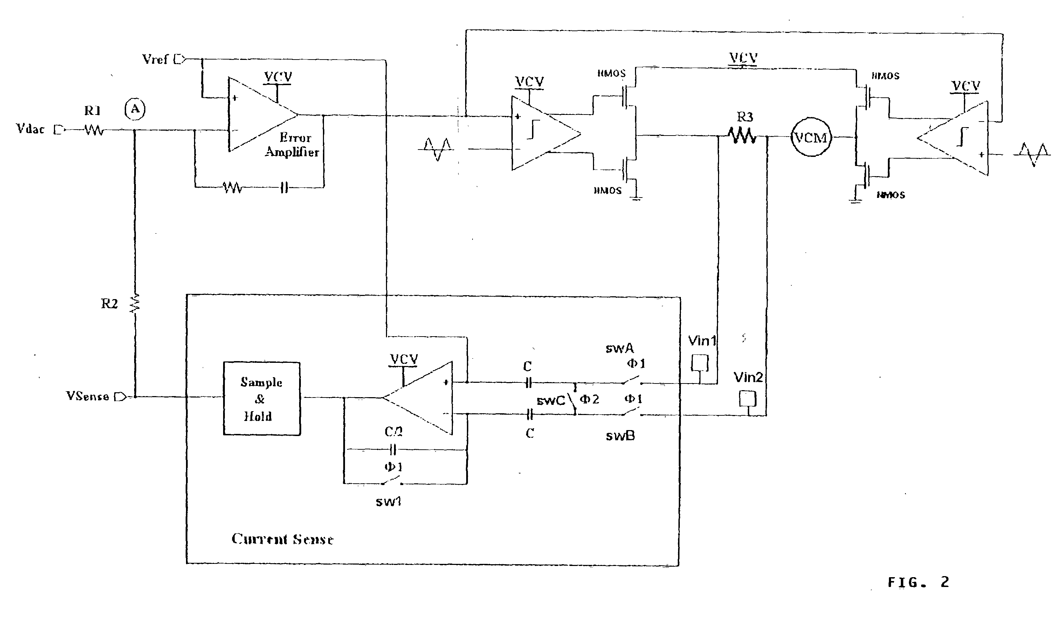

By referring to the diagram of Fig. 2, during phase Φ1, with the switches swA, swB and sw1 closed, the sampling of the voltage on the sensing resistor R3 is performed and the operational amplifier OP is configured as a buffer (unity gain).

In this phase the output, that is, the voltage Vsense, reaches the voltage Vref reference, C1 is charged to Vin1-Vref and C2 is charged to Vin2-Vref.

During phase Φ2, the two capacitances C1 and C2 are connected in series and find instantaneously at their terminals the voltage that existed on the sensing resistor R3.

The charge instantaneous stored by C1 and C2 is equal to$\text{ΔQ = (Vin1 - Vin2) ∗ (1/C1 + 1/C2)}$

The feedback of the operational amplifier OP tends to being the negative terminal to Vref and the charge stored in C1 and C2 transfers itself into C3.

In this phase the output Vsense' undergoes a voltage shift by$\text{ΔV = ΔQ/C3 = [(Vin1 - Vin2) ∗ (1/C1 + 1/C2)] / C3}$

By choosing C1=C2=C and C3=C/2, the output voltage (Vsense) of the operational amplifier OP charges by exactly the voltage existing on the sensing resistor R3.

In order to retain this value of Vsense on the output of the current sense amplifier, a sampling and storing stage implementing a so-called Sample & Hold function is added in cascade of the operational amplifier OP.

## Claims

1. An integrated current mode switching drive system of an external load (VCM) comprising a control loop closed on an input node (A) of a differential error amplifier (Error Amplifier) comparing a reference voltage (Vref) with a control voltage (Vdac), on which node (A) add, balancing each other, a first current forced by said control voltage (Vdac) through a first resistor (R1) and a second current forced by the voltage (Vsense) output by a current sense amplifier (Current Sense) of the voltage drop on a current sensing resistor (R3), connected in series to said external load (VCM) through a second resistor (R2), wherein the level of said reference voltage (Vref) is relatively smaller than the level of the differential voltage signal existing at the inputs of said current sense amplifier, and characterized in that
said current sense amplifier is a switched-capacitor amplifier composed of an operational amplifier (OP) configured alternately as buffer and as a charge transfer circuit by switches (swA, swB, swC, sw1) controlled by a pair of complementary control signals (Φ1, Φ2) and of a sampling and storing output stage (Sample & Hold).

## Patentansprüche

1. Integriertes Strombetriebsart-Schalttreibersystem für eine externe Last (VCM), das eine Regelschleife umfaßt, die an einem Eingangsknoten (A) eines Differenz-Fehlerverstärkers (Fehlerverstärker), der eine Referenzspannung (Vref) mit einer Steuerspannung (Vdac) vergleicht, geschlossen ist, wobei an dem Knoten (A) in gegenseitigem Gleichgewicht ein erster Strom, der durch die Steuerspannung (Vdac) durch einen ersten Widerstand (R1) geschickt wird, und ein zweiter Strom addiert werden, der durch die Spannung (Vsense), die von einem Stromleseverstärker (Stromerfassung) anhand des Spannungsabfalls über einem Stromerfassungswiderstand (R3), der mit der externen Last (VCM) in Reihe geschaltet ist, ausgegeben wird, durch einen zweiten Widerstand (R2) geschickt wird, wobei der Pegel der Referenzspannung (Vref) relativ kleiner als der Pegel des Differenzspannungssignals ist, das an den Eingängen des Stromleseverstärkers vorhanden ist, und dadurch gekennzeichnet, daß
der Stromleseverstärker ein Schaltkondensator-Verstärker ist, der aus einem Operationsverstärker (OP), der durch Schalter (swA, swB, swC, swl), die durch ein Paar komplementärer Steuersignale (Φ1, Φ2) gesteuert werden, abwechselnd als Puffer und als Ladungsübertragungsschaltung konfiguriert wird, und aus einer Abtast-/Halte-Ausgangsstufe (Abtasten/Halten) aufgebaut ist.

## Revendications

1. Système intégré d'alimentation à découpage en mode courant d'une charge externe (VCM) comprenant une boucle de commande fermée sur un noeud d'entrée (A) d'un amplificateur d'erreur différentiel comparant une tension de référence (Vref) à une tension de commande (Vdac), dans lequel on ajoute sur le noeud (A), s'équilibrant mutuellement, un premier courant forcé par la tension de commande (Vdac) par l'intermédiaire d'une première résistance (R1) et un second courant forcé par la tension (Vsense) de sortie d'un amplificateur de détection de courant de la chute de tension sur une résistance de détection de courant (R3), connectée en série avec la charge externe (VCM) par l'intermédiaire d'une seconde résistance (R2), dans lequel le niveau de la tension de référence (Vref) est relativement plus petit que le niveau du signal de tension différentiel existant sur les entrées de l'amplificateur de détection de courant, et caractérisé en ce que :
l'amplificateur de détection de courant est un amplificateur à capacités commutées constitué d'un amplificateur opérationnel (OP) auquel on donne alternativement la configuration d'un tampon et d'un circuit de transfert de charge au moyen de commutateurs (swA, swB, swC, sw1) , commandés par une paire de signaux de commande complémentaires (φ1, φ2) et d'un étage de sortie d'échantillonnage maintien (Sample & Hold).
